# EUROPEAN PATENT APPLICATION

(11) **EP 2 387 203 A1**
(43) Date of publication of application: **16.11.2011**
(21) Application number: 11165085.9
(22) Date of filing: 06.05.2011
(51) Int. Cl.: H04L 29/08, G06F 3/14, H04N 7/26, H04N 7/50, H04N 7/36

(54) **Image transmission from a server to a thin client**

(30) Priority: 10.05.2010 JP 2010108799
(71) Applicant: FUJITSU LIMITED, Kawasaki-shi, Kanagawa 211-8588 (JP)
(72) Inventor: Matsui, Kazuki, Kawasaki-shi Kanagawa 211-8588 (JP); Imai, Tomoharu, Kawasaki-shi, Kanagawa 211-8588 (JP); Ohno, Takashi, Kawasaki-shi, Kanagawa 211-8588 (JP); Kihara, Hideto, Kawasaki-shi, Kanagawa 211-8588 (JP); Horio, Kenichi, Kawasaki-shi, Kanagawa 211-8588 (JP); Miyamoto, Ryo, Kawasaki-shi, Kanagawa 211-8588 (JP)
(74) Representative: Stebbing, Timothy Charles

(57) **Abstract**

An information processing device (10) includes a communication unit configured to connect to a network; a memory (13) configured to hold an image indicating an execution result of a virtual machine; and a processor (14) configured to execute processing, wherein the processor (14) compresses, on the basis of first compression processing, an image in a region in which there is the change and transmits the compressed image to a terminal device (20) connected through the network, discriminates a frequently changed region, halts the first compression processing and the transmission processing, with respect to the discriminated frequently changed region, performs second compression processing, in which the compression ratio of a temporally continuous image is higher than that of the first compression processing, on an image in the discriminated frequently changed region, and transmits the image compressed on the basis of the second compression processing to the terminal device (20).

## Description

The present invention relates to an information processing device, an image transmission program, and a method.

One type of computer system is called a thin client. In the thin client system, a system is constructed so that a client only has a minimum function and a server manages resources such as an application, a file, and the like.

Such a thin client system acts in such a manner that, while the thin client system causes a client to display a processing result obtained on the basis of processing actually executed by the server and data held in the server, the client acts as if the client independently executes the processing and holds the data.

As an example, the thin client system causes the server to execute business applications such as document creation, mail, and the like, and causes the client to display the processing results of these applications. In addition to such business applications, it is necessary to extend the range of application of the thin client system into an application such as Computer-Aided Design (CAD) or the like, in which a detailed image is handled, and furthermore, into an application in which a moving image is handled.

However, when a large amount of data is handled using a protocol used for communication in the thin client system, such as, for example, a Remote Desktop Protocol (RDP), a Remote Frame Buffer (RFB) protocol used in Virtual Network Computing (VNC), or the like, a problem that a response to an operation performed in a client is degraded occurs. In addition, such a problem is common in a case in which a large amount of data is transmitted between the client and the server in the thin client system at the time of screen updating, and is not limited to a case in which an image or a moving image is handled.

Accordingly, as an example of a technique used for improving the operational response, the following technique is discussed in JP2007-505580. A server discussed in JP2007-505580 hooks the output of a specific media application halfway, and transmits data handled by the media application to a client. On the other hand, the client performs regeneration processing for data handled by the media application running on the server.

According to an aspect of the invention, an information processing device includes a communication unit configured to connect to a network: a memory configured to hold an image indicating an execution result of a virtual machine; and a processor configured to execute processing, wherein the processor determines the frequency of a change between frames with respect to each of a plurality of regions into which the image held in the memory is segmented, compresses, on the basis of first compression processing, an image in a region in which there is the change and transmits the compressed image to a terminal device connected through the network, discriminates a frequently changed region whose frequency of a change exceeds a threshold value, halts the first compression processing and the transmission processing, with respect to the discriminated frequently changed region, performs second compression processing, in which the compression ratio of a temporally continuous image is higher than that of the first compression processing, on an image in the discriminated frequently changed region, and transmits the image compressed on the basis of the second compression processing to the terminal device.

The dvantages of the invention will be realized and attained at least by the elements, features, and combinations particularly pointed out in the claims.

It is to be understood that both the foregoing general description and the following detailed description are exemplary and explanatory and are not restrictive of the invention, as claimed.

### Reference is made, by way of example only, to the accompanying drawings in which:

Fig. 1 is a block diagram illustrating a configuration of an information processing device according to an embodiment;

Fig. 2 is a block diagram illustrating configurations of individual devices included in a thin client system according to another embodiment;

Fig. 3 is a diagram for explaining a segmentation guideline for a desktop screen;

Fig. 4A is a diagram for explaining a determination guideline for a change frequency of a desktop screen;

Fig. 4B is a diagram for explaining a determination guideline for a change frequency of a desktop screen;

Fig. 4C is a diagram for explaining a determination guideline for a change frequency of a desktop screen;

Fig. 5 is a diagram for explaining a correction guideline for a mesh-connected body;

Fig. 6 is an explanatory diagram for explaining a combination guideline for a candidate of a frequently changed region;

Fig. 7A is a diagram for explaining a notification guideline for attribute information of a frequently changed region;

Fig. 7B is a diagram for explaining a notification guideline for attribute information of a frequently changed region;

Fig. 7C is a diagram for explaining a notification guideline for attribute information of a frequently changed region;

Fig. 8 is a flowchart illustrating a procedure of image transmission processing according to another embodiment;

Fig. 9A is a diagram for explaining a delay guideline for map clearing;

Fig. 9B is a diagram for explaining a delay guideline for map clearing;

Fig. 10A is a diagram for explaining a suppression guideline for shrinking of a frequently changed region;

Fig. 10B is a diagram for explaining a suppression guideline for shrinking of a frequently changed region; and

Fig. 11 is a diagram for explaining an example of a computer that executes an image transmission program according to another embodiment.

When a remote desktop operation is performed in an environment dependent on a media application that runs with separately assigning processing operations to a server and a client, it is difficult for another type of media application to realize a remote desktop operation, and hence the general versatility of the thin client is damaged.

In order to also utilize the other type of media application in a remote desktop environment, a media application is redesigned or a preliminarily redesigned media application is preinstalled. However, in a current situation in which the source of a media application ranges widely, redesigned media applications are limited to only part of the available media applications. Therefore, when the majority of media applications other than the redesigned media applications are used, there is no alternative but to utilize the media applications with the operational responses thereof being degraded.

One embodiment improves an operational response while maintaining the general versatility of a thin client.

According to one aspect of the present invention, an information processing device is an information processing device that generates and transmits to a network an image used for displaying the execution result of a computer on a display unit in a terminal device connected through the network. The information processing device includes an image memory used for holding the image used for drawing the execution result of the computer. Furthermore, the information processing device includes a change frequency determination unit that segments the image drawn in the image memory into a plurality of regions and determines the frequency of a change between frames with respect to each of the regions. Furthermore, the information processing device includes a first image transmission unit that transmits an image in a region in which there is the change. Furthermore, the information processing device includes a frequently changed-region discrimination unit that discriminates, as a frequently updated region, a region whose frequency of a change exceeds a threshold value. Furthermore, the information processing device includes a transmission halt unit that halts the transmission performed by the first image transmission unit, with respect to the discriminated region. Furthermore, the information processing device includes a second image transmission unit that performs moving image compression processing, the compression ratio of which is higher than that of the first image transmission unit, on an image in the discriminated region and transmits the compressed image.

According to one embodiment of the information processing device, an operational response is improved while maintaining the general versatility of a thin client.

Embodiments of an information processing device, an image transmission program (which may be stored on a computer-readable medium), an image display program, and an image display method will be described on the basis of the figures.

[Embodiment]

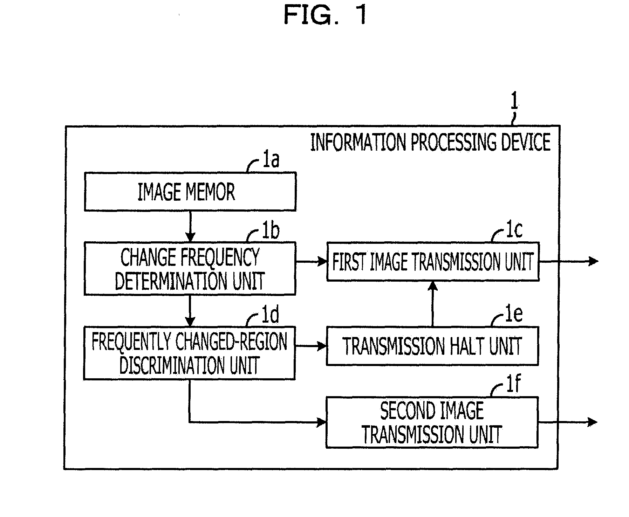

Fig. 1 is a block diagram illustrating the configuration of an information processing device according to an embodiment. An information processing device 1 illustrated in Fig. 1 executes a virtual machine program. The information processing device 1 generates and transmits to a network an image used for displaying the execution result of a virtual machine on a display unit in a terminal device connected through the network. As illustrated in Fig. 1, the information processing device 1 includes an image memory 1a, a change frequency determination unit 1b, a first image transmission unit 1c, a frequently changed-region discrimination unit 1d, a transmission halt unit 1e, and a second image transmission unit 1f.

The image memory 1a holds an image used for drawing the execution result of the virtual machine. In addition, the change frequency determination unit 1b segments the image drawn in the image memory 1a into a plurality of regions and determines the frequency of a change between frames with respect to each of the regions. In addition, the first image transmission unit 1c transmits an image in a region in which there is a change.

The frequently changed-region discrimination unit 1d discriminates, as a frequently updated region, a region whose frequency of a change exceeds a threshold value. In addition, the transmission halt unit 1e halts the transmission performed by the first image transmission unit 1c, with respect to the region discriminated, as a frequently changed region, by the frequently changed-region discrimination unit 1d. In addition, the second image transmission unit 1f performs moving image compression processing, the compression ratio of which is higher than that of the first image transmission unit 1c, on an image in the region discriminated, as a frequently changed region, by the frequently changed-region discrimination unit 1d.

Therefore, in the information processing device 1, independent on application program, the frequently changed region in which a compression method for a moving image is utilized is discriminated. Furthermore, in the information processing device 1, an image corresponding to the frequently changed region is compressed into data based on the compression method for a moving image, while, with respect to a region other than the frequently changed region, an image corresponding to a portion in which there is a change is transmitted. Therefore, in the information processing device 1, while the amount of data is reduced focusing on an image to be an underlying cause for degrading an operational response from among images to be transmitted to the terminal device, the loads of an encoder performing compression processing and a decoder performing decoding processing on the terminal device side are reduced. Therefore, according to the information processing device 1, an operational response is improved while maintaining the general versatility of a thin client. Furthermore, in the information processing device 1, since the amount of data to be transmitted to the terminal device is reduced, the reduction of a transmission delay between the information processing device and the terminal device results in also reducing the possibility that the dropping frames of an image displayed on the terminal device side occur.

[Another Embodiment]

[System Configuration]

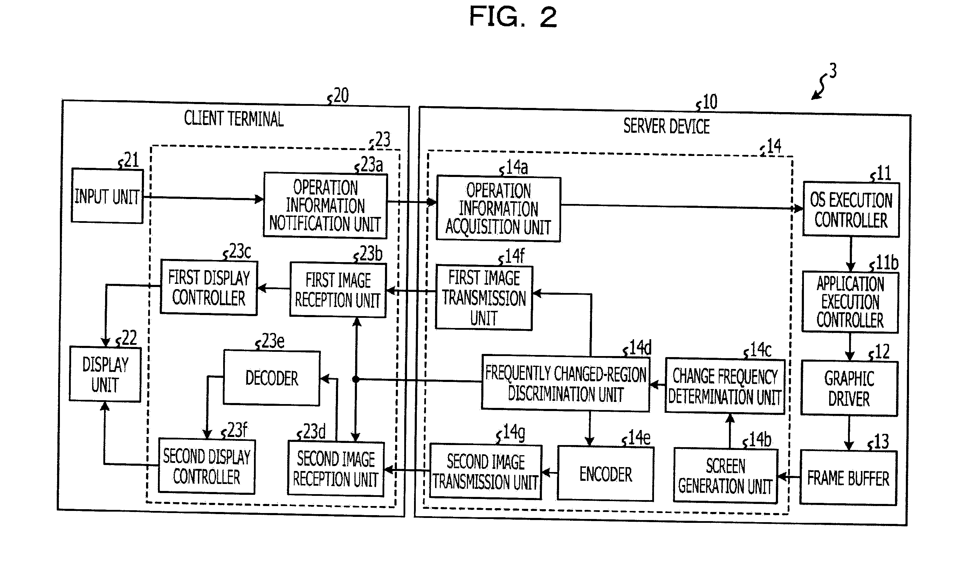

Subsequently, the configuration of a thin client system according to the other embodiment will be described. Fig. 2 is a block diagram illustrating the configurations of individual devices included in the thin client system according to another embodiment.

A thin client system 3 illustrated in Fig. 2 causes a server device 10 to remotely control a screen displayed by the client terminal 20. Namely, the thin client system 3 acts in such a manner that, while the thin client system 3 causes the client 20 to display a processing result obtained on the basis of processing actually executed by the server 10 and data held in the server 10, the client 20 acts as if the client 10 independently executes the processing and holds the data.

As illustrated in Fig. 2, the thin client system 3 includes the server device 10 and the client terminal 20. In addition, while, in the example in Fig. 2, a case is illustrated in which one client terminal is connected to one server device 10, an arbitrary number of client terminals are connected.

These server device 10 and client terminal 20 are connected to each other through a Network, and establish communication with each other. As such a network, regardless of wired or wireless, an arbitrary type of communication network such as Internet, a Local Area Network (LAN), a Virtual Private Network (VPN), or the like may be adopted. In addition, with respect to a communication protocol (Protocol) between the server device 10 and the client terminal 20, a case is assumed in which a Remote Frame Buffer (RFB) protocol in the VNC is adopted, as an example.

The server device 10 is a computer that provides service for remotely controlling a screen displayed by the client terminal 20. A remote screen control-use application for a server is installed or preinstalled into the server device 10. In addition, hereinafter, the remote screen control-use application for a server will be called a server-side remote screen control-use application.

The server-side remote screen control-use application includes, as a basic function, a function for providing remote screen control service. As an example, after acquiring operation information in the client terminal 20, the server-side remote screen control-use application causes an application running on the self-device to execute processing requested by the operation. In addition, after generating a screen used for displaying the result of processing executed by the application, the server-side remote screen control-use application transmits the screen to the client terminal 20. At this time, the server-side remote screen control-use application transmits a region in which pixels assemble, namely, an image of an updated rectangle, the pixels existing in a portion in which there is a change between the generated screen and a bitmapped image the client terminal 20 has been caused to display before this generation of the screen. In addition, while, hereinafter, as an example, a case will be described in which the image of an updated portion is formed by a rectangular image, the disclosed device may be applied to a case in which the image of an updated portion is formed by a shape other than a rectangle.

In addition to this, the server-side remote screen control-use application also includes a function for compressing, into data based on a compression method for a moving image, data in a portion in which there is a large motion between frames, and transmitting the data to the client terminal 20. As an example, the server-side remote screen control-use application segments, into a plurality of regions, a screen generated from the result of processing executed by an application, and monitors the frequency of a change with respect to each of the segmented regions. At this time, the server-side remote screen control-use application transmits to the client terminal 20 the attribute information of a region whose frequency of a change exceeds a threshold value, namely, a frequently changed region. In parallel, after encoding the bitmapped image of the frequently changed region into data based on an MPEG method such as MPEG-2, MPEG-4, or the like, the server-side remote screen control-use application transmits the data to the client terminal 20. In addition, while, here, a case is exemplified in which the bitmapped image is compressed into the Moving Picture Experts Group (MPEG) method, the embodiment is not limited to the example. For example, if a compression method for a moving image is adopted, an arbitrary compression encoding method, for example, Joint Photographic Experts Group (Motion-JPEG) method or the like, may be adopted.

The client terminal 20 is a computer on a side that receives the provision of remote screen control service from the server device 10. As an example of such a client terminal 20, a mobile terminal such as a mobile phone, a Personal Handyphone System (PHS), a Personal Digital Assistant (PDA), or the like may be adopted in addition to a fixed terminal such as a personal computer or the like. A remote screen control-use application for a client is installed or preinstalled into the client terminal 20. In addition, hereinafter, the remote screen control-use application for a client will be called a client-side remote screen control-use application.

The client-side remote screen control-use application includes a function for notifying the server device 10 of operation information accepted through various kinds of input devices such as a mouse, a keyboard, and the like. As an example, the client-side remote screen control-use application gives notice of, as operation information, a double click, drag, the displacement amount of a mouse cursor, obtained through a displacement operation for a mouse, or the like, as well as the right and left clicks of the mouse. As another example, the client-side remote screen control-use application also gives notice of, as operation information, the rotation amount of a mouse wheel, the type of a key held down on a keyboard, or the like.

Furthermore, the client-side remote screen control-use application includes a function for causing a display unit in a client to display an image received from the server device 10. As an example, when receiving a bitmapped image of an updated rectangle from the server device 10, the client-side remote screen control-use application adjusts the bitmapped image of an updated rectangle to a position at which there is a change from a previous bitmapped image, and displays the bitmapped image. As another example, when receiving the attribute information of a frequently changed region from the server device 10, the client-side remote screen control-use application sets a region on a display screen, which corresponds to a position included in the attribute information, to a blank region that is not a display target of the bitmapped image. On that basis, when receiving data based on a compression method for a moving image, the client-side remote screen control-use application displays the data on the blank region after decoding the data.

[Configuration of Server Device]

Next, the configuration of the server device will be described. As illustrated in Fig. 2, the server device 10 includes an OS execution controller 11a, an application execution controller 1lb, a graphic driver 12, a frame buffer 13, and a server-side remote screen controller 14. In addition, in the example in Fig. 2, it is assumed that the server device 10 includes various kinds of functional units included in a usual computer, for example, functions of various kinds of input devices, various kinds of display devices, and the like, in addition to functional units illustrated in Fig. 2.

The OS execution controller 11a is a processing unit that controls the execution of an Operating System (OS). For example, the OS execution controller 11a detects an instruction for activating an application and a command for the application from operation information acquired by an operation information acquisition unit 14a described later. As an example, when detecting a double click on the icon of an application, the OS execution controller 11a instructs the application execution controller 11b described later to activate an application corresponding to the icon. As another example, when detecting an operation requesting the execution of a command on the operation screen of the running application, namely, a so-called window, the OS execution controller 11a instructs the application execution controller 11b to execute the command.

The application execution controller 11b is a processing unit that controls the execution of an application on the basis of an instruction from the OS execution controller 11a. As an example, when the OS execution controller 11a instructs the application execution controller 11b to activate an application or the OS execution controller 11a instructs a running application to execute a command, the application execution controller 11b causes the application to run. In addition, the application execution controller 11b instructs the graphic driver 12 described later to draw in the frame buffer 13 an image used for displaying a processing result obtained by executing the application. When making a drawing request to the graphic driver 12 in such a way, the application execution controller 11b notifies the graphic driver 12 of a display-use image and the drawing position of the display-use image.

In addition, an application executed by the application execution controller 11b may be a preinstalled application or an application installed after the shipment of the server device 10. In addition, the application executed by the application execution controller 11b may be an application running within a network environment such as JAVA (registered trademark) or the like.

The graphic driver 12 is a processing unit that executes drawing processing for the frame buffer 13. As an example, when accepting the drawing request from the application execution controller 11b, the graphic driver 12 draws, using a bitmap format, an image, used for displaying the processing result of the application, at a drawing position on the frame buffer 13, designated by the application. In addition, while, here, a case has been described in which an application accepts a drawing request, a drawing request from the OS execution controller 11a may be accepted. As an example, when receiving a drawing request for a mouse cursor from the OS execution controller 11a, the graphic driver 12 draws, using a bitmap format, an image, used for displaying the mouse cursor, at a drawing position on the frame buffer 13, designated by the OS.

The frame buffer 13 is a storage device that stores the bitmap data drawn by the graphic driver 12. As an embodiment of such a frame buffer 13, a semiconductor memory device such as a Random Access Memory (RAM), a Read Only Memory (ROM), a flash memory, or the like, as well as a Video Random Access Memory (VRAM), may be cited. In addition, a storage device such as a hard disk, an optical disk, or the like may be adopted as the frame buffer 13.

The server-side remote screen controller 14 is a processing unit that provides remote screen control service to the client terminal 20 through the server-side remote screen control-use application. As illustrated in Fig. 2, the server-side remote screen controller 14 includes an operation information acquisition unit 14a, a screen generation unit 14b, a change frequency determination unit 14c, a frequently changed-region discrimination unit 14d, an encoder 14e, a first image transmission unit 14f, and a second image transmission unit 14g.

The operation information acquisition unit 14a is a processing unit that acquires operation information from the client terminal 20. As an example of such operation information, a double click, drag, the displacement amount of a mouse cursor, obtained through a displacement operation for a mouse, or the like is cited, as well as the right and left clicks of the mouse. As another example of the operation information, the rotation amount of the mouse wheel, the type of a key held down on a keyboard, or the like is also cited.

The screen generation unit 14b is a processing unit that generates the image of a screen to be displayed on a display unit 22 in the client terminal 20. As an example, the screen generation unit 14b activates the following processing every time the graphic driver 12 stores bitmap data in the frame buffer 13. Namely, the screen generation unit 14b compares a desktop screen displayed in the client terminal 20 at the time of the previous generation of a frame with a desktop screen written into the frame buffer 13 at the time of the current generation of a frame. In addition, after putting together pixels in a portion in which there is a change from a previous frame, the screen generation unit 14b generates the image of an updated rectangle that is a rectangle into which the pixels are shaped, and generates a packet used for the transmission of the updated rectangle.

The change frequency determination unit 14c is a processing unit that determines the frequency of a change between frames with respect to each of regions into which the image drawn in the frame buffer 13 is segmented. As an example, the change frequency determination unit 14c stores the updated rectangle generated by the screen generation unit 14b in a working internal memory not illustrated, for a certain period of time. At this time, the change frequency determination unit 14c stores attribute information used for specifying the position and size of the updated rectangle, for example, the coordinates of the upper left vertex of the updated rectangle and the width and height of the updated rectangle. A period of time during which such an updated rectangle is stored has a correlation with the degree of accuracy for discriminating a frequently changed region, and the false detection of the frequently changed region is reduced with an increase in the period of time. In addition, here, as an example, a case is assumed in which the image of the updated rectangle is stored for one second.

At this time, when a certain period of time has elapsed from the storage of the image of the updated rectangle, the change frequency determination unit 14c determines the change frequency of a desktop screen using a map obtained by segmenting the desktop screen to be displayed by the client terminal 20 into meshes.

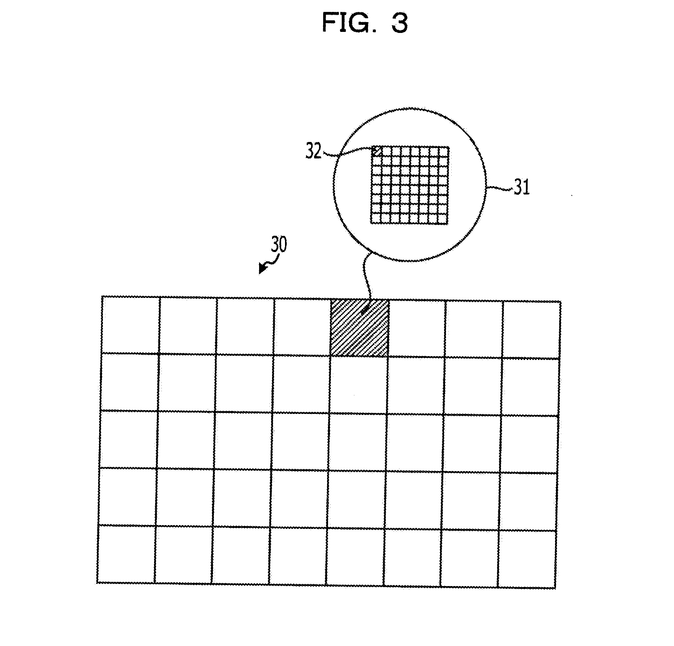

Fig. 3 is a diagram for explaining a segmentation guideline for the desktop screen. A symbol 30 illustrated in Fig. 3 indicates a map for change frequency determination. A symbol 31 illustrated in Fig. 3 indicates a mesh included in the map 30. A symbol 32 illustrated in Fig. 3 indicates one pixel included in a block that includes pixels forming the mesh 31. In the example illustrated in Fig. 3, a case is assumed in which the change frequency determination unit 14c segments the desktop screen with a block of 8 pixels x 8 pixels from among pixels accounting for the map 30 as 1 mesh. In this case, 1 mesh turns out to include 64 pixels.

Here, the change frequency determination unit 14c sequentially deploys the image of the updated rectangle to a map used for change frequency determination in accordance with the position and size of the updated rectangle, stored in the working internal memory. In addition, every time deploying the updated rectangle to the map, the change frequency determination unit 14c cumulatively adds the number of times meshes in a portion overlapping with the updated rectangle on the map are changed. At this time, when the updated rectangle deployed to the map overlaps with pixels included in a mesh, the number of which is greater than or equal to a threshold value, the change frequency update unit 14c increments by one the number of times the mesh is changed. In addition, here, a case is assumed in which the number of times the mesh is changed is incremented when the updated rectangle overlaps with at least one pixel included in a mesh, and the case will be described.

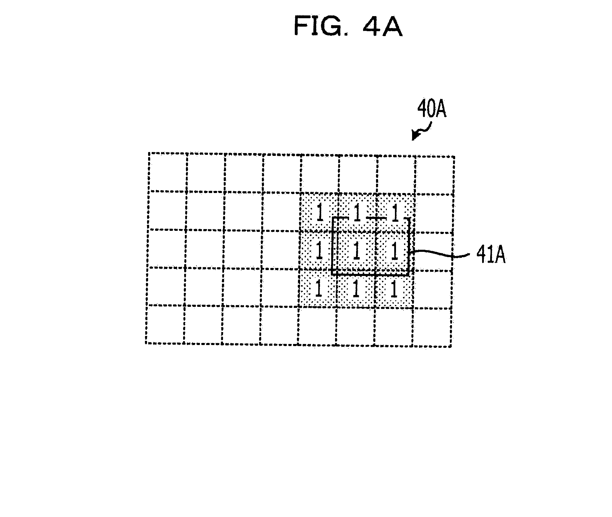

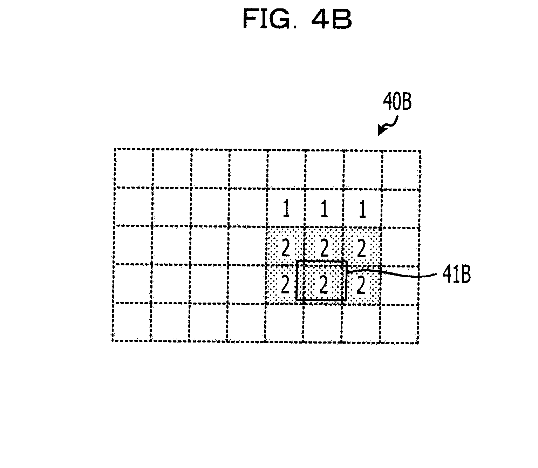

Figs. 4A to 4C are diagrams for explaining a determination guideline for a change frequency of a desktop screen. A symbol 40A, a symbol 40B, and a symbol 40N illustrated in Figs. 4A to 4C indicate maps for change frequency determination, respectively. A symbol 41A and a symbol 41B illustrated in Figs. 4A and 4B indicate updated rectangles, respectively. Here, numbers illustrated in meshes in the map 40A indicate the numbers of times meshes are changed, at a time point when the updated rectangle 41A is deployed. In addition, numbers illustrated in meshes in the map 40B indicate the numbers of times meshes are changed, at a time point when the updated rectangle 41B is deployed. Furthermore, numbers illustrated in meshes in the map 40N indicate the numbers of times meshes are changed, at a time point when all updated rectangles stored in the working internal memory are deployed. In addition, it is assumed that the numbers of times meshes in which no number is illustrated are changed are zero in Figs. 4A to 4C.

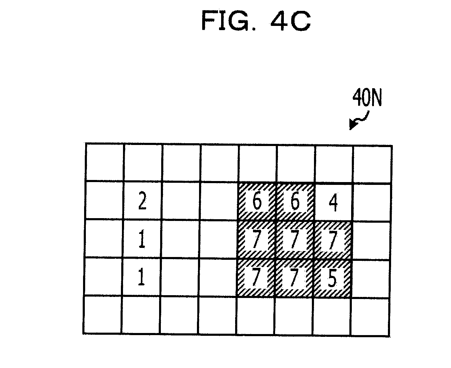

As illustrated in Fig. 4A, when the updated rectangle 41A is deployed to the map 40A, meshes in a shaded portion overlap with the updated rectangle 41A. Therefore, the change frequency determination unit 14c increments the update count of each of meshes in the shaded portion by one. In this case, since the number of times each of the meshes is changed is zero, the number of times the shaded portion is changed is increment from zero to one. Furthermore, as illustrated in Fig. 4B, when the updated rectangle 41B is deployed to the map 40B, meshes in a shaded portion overlap with the updated rectangle 41B. Therefore, the change frequency determination unit 14c increments the update count of each of meshes in the shaded portion by one. In this case, since the number of times each of the meshes is changed is zero, the number of times the shaded portion is changed is increment from one to two. In a stage in which all updated rectangles are deployed to the map in such a way, the result of the map 40N illustrated in Fig. 4C is obtained.

In addition, when finishing deploying all updated rectangles stored in the working internal memory to the map, the change frequency determination unit 14c acquires a mesh, the number of times which is changed during a certain period of time, namely, the change frequency thereof, exceeds a threshold value. In the example in Fig. 4C, when the threshold value is "4", meshes in the shaded portion turn out to be acquired. The encoder 14e encodes a portion having a higher possibility that a moving image is displayed therein on a desktop screen, with an increase in the value of such a threshold value. In addition, with respect to the above-mentioned "threshold value", an end-user may be caused to select one of values set in a stepwise manner by the developer of a server-side remote screen control-use application, or an end-user may directly set the value thereof.

Returning to the description of Fig. 2, the frequently changed-region discrimination unit 14d is a processing unit that discriminates, as a frequently changed region, a region frequently changed in the desktop screen displayed by the client terminal 20.

When the change frequency determination unit 14c acquires a mesh the number of times which is changed exceeds the threshold value, the frequently changed-region discrimination unit 14d corrects into a rectangle a mesh-connected body in which adjacent meshes are connected to one another. As an example, after deriving an interpolated region to be interpolated for the mesh-connected body, the frequently changed-region discrimination unit 14d adds the interpolated region to the mesh-connected body, thereby correcting the mesh-connected body into a rectangle. An algorithm that derives a region used for shaping the mesh-connected body into a rectangle on the basis of a minimum interpolation is applied to the derivation of the interpolated region.

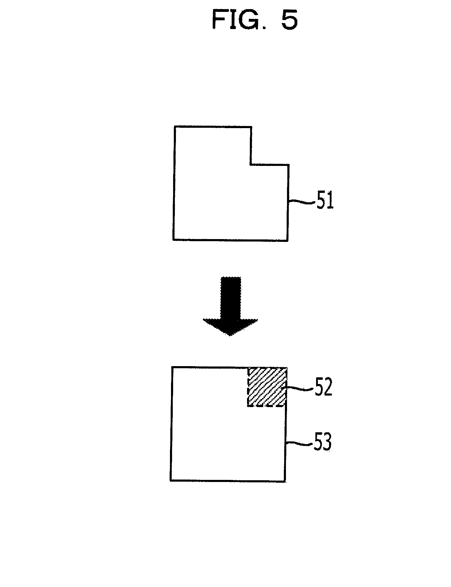

Fig. 5 is a diagram for explaining a correction guideline for the mesh-connected body. A symbol 51 illustrated in Fig. 5 indicates a mesh-connected body before the correction. A symbol 52 illustrated in Fig. 5 indicates an interpolated region. In addition, a symbol 53 illustrated in Fig. 5 indicates a rectangle after the correction. As illustrated in Fig. 5, the frequently changed-region discrimination unit 14d corrects the mesh-connected body 51 into the rectangle 53 by adding the interpolated region 52 to the mesh-connected body 51. In this stage, since the combination of a rectangle, described later, is not completed, and the rectangle 53 has not been confirmed as a frequently changed region, the rectangle after the correction is called a candidate of the frequently changed region.

When there are a plurality of candidates of the frequently changed region, the frequently changed-region discrimination unit 14d combines plural candidates of the frequently changed region with one another into a rectangle including the plural candidates of the frequently changed region the distances between which are less than or equal to a threshold value. The term "distance between candidates of a frequently changed region" here indicates a minimum distance of a rectangle after the correction. As an example, after deriving an interpolated region used for filling a gap between individual candidates at the time of the combination of the candidates of a frequently changed region, the frequently changed-region discrimination unit 14d combines plural candidates of the frequently changed region with one another into a rectangle including the plural candidates of the frequently changed region, by adding the interpolated region to the candidates of the frequently changed region. An algorithm that derives a region used for shaping a gap between candidates of the frequently changed region into a combined body on the basis of a minimum interpolation is applied to the derivation of the interpolated region.

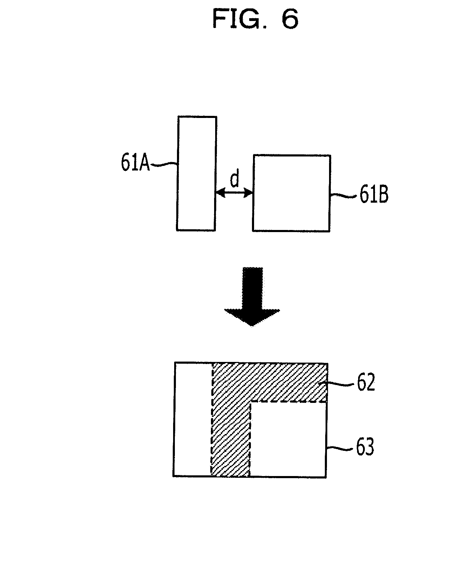

Fig. 6 is an explanatory diagram for explaining a combination guideline for a candidate of the frequently changed region. A symbol 6 1 A and a symbol 61 B illustrated in Fig. 6 indicate candidates of the frequently changed region. A symbol 62 illustrated in Fig. 61 indicates an interpolated region. A symbol 63 illustrated in Fig. 61 indicates the combined body of the candidate 61A of the frequently changed region and the candidate 61B of the frequently changed region. As illustrated in Fig. 6, the frequently changed-region discrimination unit 14d combines the candidate 61A and candidate 61B of the frequently changed region with the interpolated region 62 into the combined body 63 including the candidate 61A of the frequently changed region and the candidate 61B of the frequently changed region, by adding the interpolated region 62 to the candidate 61A of the frequently changed region and the candidate 61B of the frequently changed region. In addition, the frequently changed-region discrimination unit 14d discriminates the combined body obtained in such a way, as the frequently changed region.

When discriminating the frequently changed region in such a way, the frequently changed-region discrimination unit 14d transmits, to the client terminal 20, attribute information used for specifying the position and size of the frequently changed region. Accordingly, a portion corresponding to the frequently changed region from among the bitmap data of a desktop screen displayed by the client terminal 20 is displayed in blank. After that, the frequently changed-region discrimination unit 14d clears the numbers of times meshes are changed, mapped in the working internal memory. In addition, the frequently changed-region discrimination unit 14d registers the attribute information of the frequently changed region in the working internal memory.

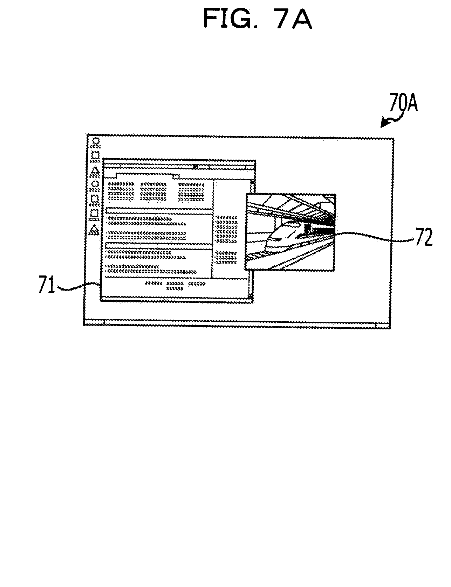

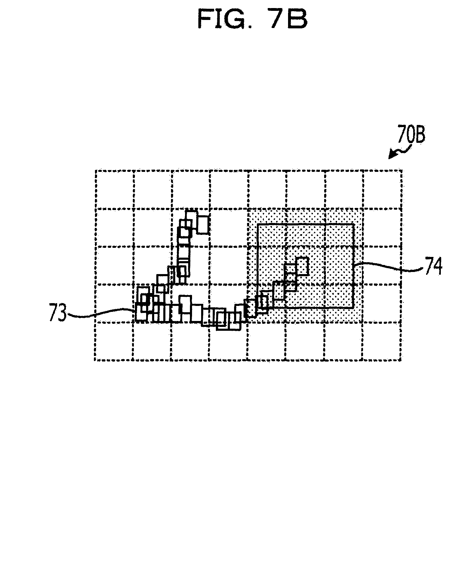

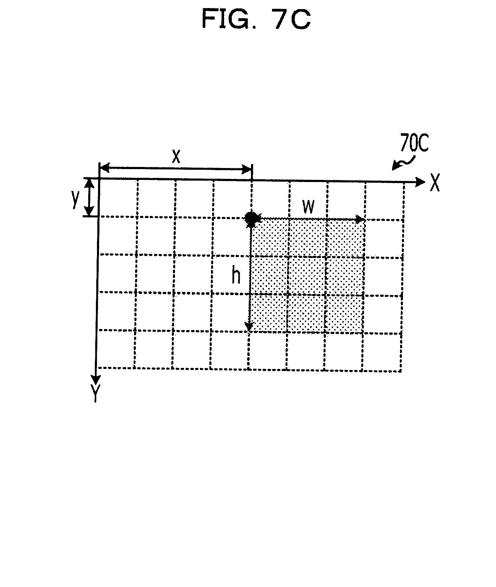

Figs. 7A to 7C are diagrams for explaining a notification guideline for the attribute information of the frequently changed region. A symbol 70A illustrated in Fig. 7A indicates an example of a desktop screen drawn in the frame buffer 13. A symbol 70B and a symbol 70C, illustrated in Fig. 7B and 7C, indicate maps for change frequency determination. A symbol 71 illustrated in Fig. 7A indicates a browser screen. A symbol 72 illustrated in Fig. 7A indicates a moving image regeneration screen. A symbol 73 illustrated in Fig. 7B indicates the displacement trajectory of a mouse. A symbol 74 illustrated in Fig. 7B indicates a moving image regeneration region based on an application.

As illustrated in Fig. 7A, the desktop screen 70A includes the browser screen 71 and the moving image regeneration screen 72. When a temporal change is tracked on the desktop screen 70A, the updated rectangle of the browser screen 71 that is a still image is not detected, and updated rectangles relating to the displacement trajectory 73 of the mouse and the moving image regeneration region 74 are detected, as illustrated in Fig. 7B. It is assumed that, from among them, meshes, which are located in the moving image regeneration region 74 and the numbers of times which are changed exceed a threshold value, namely, a shaded portion illustrated in this figure, are discriminated by the frequently changed-region discrimination unit 14d. In this case, the frequently changed-region discrimination unit 14d transmits to the client terminal 20 the coordinates (x, y) of the upper left vertex of the frequently changed region corresponding to the shaded portion illustrated in Fig. 7C and the width w and height h of the frequently changed region, as the attribute information of the frequently changed region. In addition, here, a case has been described in which the coordinates of the upper left vertex are adopted as a point used for specifying the position of the frequently changed region, another vertex may be adopted. In addition, an arbitrary point other than the vertex, such as, for example, a median point or the like, may be adopted if the point specifies the position of the frequently changed region. In addition, here, a case has been described in which the upper left corner of the screen is defined as the origin of the coordinate axes XY, an arbitrary point in the screen or outside the screen may be defined as the origin.

In addition, every time the screen generation unit 14b generates an updated rectangle, the frequently changed-region discrimination unit 14d determines whether or not the updated rectangle is included in a frequently changed region stored in the working internal memory, namely, a region to which the second image transmission unit 14g described later is transmitting a moving image. At this time, when the updated rectangle is not included in the frequently changed region, the frequently changed-region discrimination unit 14d causes the first image transmission unit 14f described later to transmit the image of the updated rectangle and the attribute information thereof. On the other hand, when the updated rectangle is included in the frequently changed region, the frequently changed-region discrimination unit 14d does not cause the first image transmission unit 14f described later to transmit the image of the updated rectangle and the attribute information thereof, as a general rule. In addition, when the updated rectangle is an updated rectangle for the mouse, drawn by the OS execution controller 11a, the frequently changed-region discrimination unit 14d may cause the first image transmission unit 14f described later to exceptionally transmit the image of the updated rectangle and the attribute information thereof, which are related to the mouse.

In addition, every time bitmap data is drawn in the frame buffer 13, the frequently changed-region discrimination unit 14d determines whether or not the attribute information of the frequently changed region is registered in the working internal memory. In addition, when the attribute information of the frequently changed region is registered, the frequently changed-region discrimination unit 14d cuts out the bitmapped image of a portion corresponding to the frequently changed region from the bitmap data drawn in the frame buffer 13, and subsequently outputs the cut out bitmapped image to the encoder 14e described later.

The encoder 14e is a processing unit that encodes the image of the frequently changed region input from the frequently changed-region discrimination unit 14d. As an example, when the bitmapped image of the frequently changed region input from the frequently changed-region discrimination unit 14d reaches the number of frames that form a stream, the encoder 14e encodes the bitmapped image of the frequently changed region. In addition, as an embodiment of an encoding method, an MPEG method such MPEG-2, MPEG-4, or the like or a Motion-JPEG method may be cited.

The first image transmission unit 14f is a processing unit that transmits to the client terminal 20 the image and the attribute information of an updated rectangle generated by the screen generation unit 14b. As an example, an RFB protocol in VNC is adopted as a communication protocol used when the updated rectangle is transmitted.

The second image transmission unit 14g is a processing unit that transmits to the client terminal 20 the encoded image of the frequently changed region, encoded by the encoder 14e. As an example, a Real-time Transport Protocol (RTP) may be adopted as a communication protocol used when the encoded image of the frequently changed region is transmitted.

In addition, various kinds of integrated circuits or various kinds of electronic circuits may be adopted as the OS execution controller 11a, the application execution controller 11b, the graphic driver 12, and the server-side remote screen controller 14. In addition, another integrated circuit or another electronic circuit may be used as a portion of functional units included in the server-side remote screen controller 14. For example, as the integrated circuit, an Application Specific Integrated Circuit (ASIC) or a Field Programmable Gate Array (FPGA) may be cited. In addition, as the electronic circuit, a Central Processing Unit (CPU) or a Micro Processing Unit (MPU) may be cited.

[Configuration of Client terminal]

Next, the configuration of the client terminal will be described. As illustrated in Fig. 2, the client terminal 20 includes an input unit 21, a display unit 22, and a client-side remote screen controller 23. In addition, in the example in Fig. 2, it is assumed that the client terminal 20 includes various kinds of functional units included in a usual computer, for example, functions such as an audio output unit and the like, in addition to functional units illustrated in Fig. 2.

The input unit 21 is an input device that receives various kinds of information, for example, an instruction input to the client-side remote screen controller 23 described later, and a keyboard, a mouse, or the like is applied to the input unit 21, as an example. In addition, the display unit 22 described later also realizes a pointing device function in cooperation with the mouse.

The display unit 22 is a display device that displays various kinds of information, for example, a desktop screen transmitted from the server device 10, or the like, and a monitor, a display, a touch panel, or the like may be applied to the display unit 22, as an example.

The client-side remote screen controller 23 is a processing unit that receives remote screen control service provided by the server device 10 through a client-side remote screen control-use application. As illustrated in Fig. 2, the client-side remote screen controller 23 includes an operation information notification unit 23a, a first image reception unit 23b, a first display controller 23c, a second image reception unit 23d, a decoder 23e, and a second display controller 23f.

The operation information notification unit 23a is a processing unit that notifies the server device 10 of operation information based on the input unit 21. As an example, the operation information notification unit 23a gives notice of, as operation information, a double click, drag, the displacement amount of a mouse cursor, obtained through a displacement operation for a mouse, or the like, as well as the right and left clicks of the mouse. As another example, the operation information notification unit 23a also gives notice of, as operation information, the rotation amount of the mouse wheel, the type of a key held down on a keyboard, or the like.

The first image reception unit 23b is a processing unit that receives the image and the attribute information of the updated rectangle, transmitted by the first image transmission unit 14f in the server device 10. In addition, the first image reception unit 23b also receives the attribute information of the frequently changed region transmitted by the frequently changed-region discrimination unit 14d in the server device 10.

The first display controller 23c is a processing unit that causes the display unit 11 to display the image of the updated rectangle received by the first image reception unit 23b. As an example, the first display controller 23c causes the bitmapped image of the updated rectangle to be displayed on a screen region on the display unit 22 that corresponds to a position and a size included in the attribute information of the updated rectangle, received by the first image reception unit 23b. In addition, when the first image reception unit 23b receives the attribute information of the frequently changed region, the first display controller 23c performs the following processing. Namely, the first display controller 23c sets a screen region on the display unit 22, which corresponds to the position and the size of the frequently changed region, included in the attribute information of the frequently changed region, to a blank region that is not a display target of the bitmapped image.

The second image reception unit 23d is a processing unit that receives the encoded image of the frequently changed region, transmitted from the second image transmission unit 14g in the server device 10. In addition, the second image reception unit 23d also receives the attribute information of the frequently changed region transmitted by the frequently changed-region discrimination unit 14d in the server device 10.

The decoder 23e is a processing unit that decodes the encoded image of the frequently changed region, received by the second image reception unit 23d. In addition, a decoder, based on a decoding method conforming to an encoding method installed in the server device 10, is installed in the decoder 23e.

The second display controller 23f is a processing unit that causes the display unit 22 to display the decoded image of the frequently changed region decoded by the decoder 23e, on the basis of the attribute information of the frequently changed region, received by the first image reception unit 23b. As an example, the second display controller 23f causes the decoded image of the frequently changed region to be displayed on a screen region on the display unit 22, which corresponds to the position and the size of the frequently changed region, included in the attribute information of the frequently changed region.

In addition, various kinds of integrated circuits or various kinds of electronic circuits may be adopted as the client-side remote screen controller 23. In addition, another integrated circuit or another electronic circuit may be used as a portion of functional units included in the client-side remote screen controller 23. For example, as the integrated circuit, an Application Specific Integrated Circuit (ASIC) or a Field Programmable Gate Array (FPGA) may be cited. In addition, as the electronic circuit, a Central Processing Unit (CPU) or a Micro Processing Unit (MPU) may be cited.

[Flow of Processing]

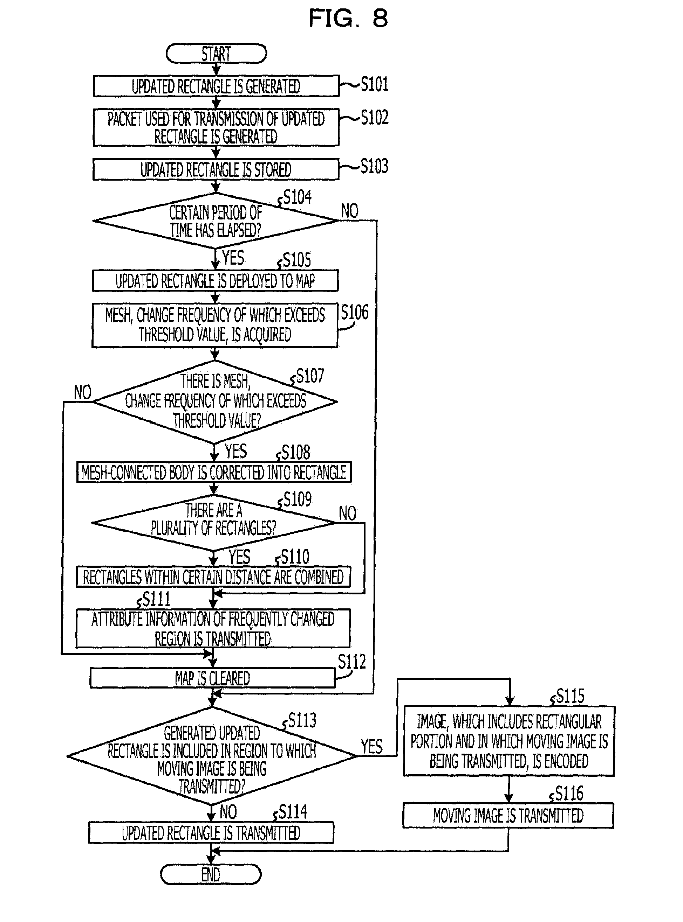

Next, the flow of processing performed in the thin client system will be described. Fig. 8 is a flowchart illustrating the procedure of image transmission processing according to an embodiment. The image transmission processing is processing executed by the server device 10, and is activated when bitmap data is drawn in the frame buffer 13.

As illustrated in Fig. 8, when the bitmap data is drawn in the frame buffer 13, the screen generation unit 14b puts together pixels in a portion in which there is a change from a previous frame, and subsequently generates the image of an updated rectangle that is a rectangle into which the pixels are shaped (operation S 101). In addition, the screen generation unit 14b generates a packet used for the transmission of the updated rectangle, from the previously generated image of the updated rectangle (operation S 102).

Subsequently, the change frequency determination unit 14c stores the updated rectangle generated by the screen generation unit 14b in a working internal memory not illustrated (operation S 103). At this time, when a certain period of time has not elapsed from starting of the storage of the updated rectangle (operation S 104: negative), subsequent processing operations relating to the discrimination of the frequently changed region are skipped, and the processing shifts to operation S 113 described later.

On the other hand, when the certain period of time has elapsed from the starting of the storage of the updated rectangle (operation S104: affirmative), the change frequency determination unit 14c performs the following processing. Namely the change frequency determination unit 14c sequentially deploys the image of the updated rectangle to the map used for change frequency determination, in accordance with the position and the size of the updated rectangle, stored in the working internal memory (operation S 105). In addition, the change frequency determination unit 14c acquires a mesh, the change frequency of which exceeds a threshold value, from among meshes included in the map used for change frequency determination (operation S106).

After that, the frequently changed-region discrimination unit 14d determines whether or not the change frequency determination unit 14c acquires a mesh the change frequency of which exceeds the threshold value (operation S107). At this time, in a case in which there is no mesh the change frequency of which exceeds the threshold value (operation S107: negative), since there is no frequently changed region on the desktop screen, the frequently changed-region discrimination unit 14d skips subsequent processing operations relating to the discrimination of the frequently changed region, and shifts to operation S 112.

On the other hand, when there is a mesh the change frequency of which exceeds the threshold value (operation S107: affirmative), the frequently changed-region discrimination unit 14d corrects into a rectangle a mesh-connected body in which adjacent meshes are connected to one another (operation S108).

In addition, when there are a plurality of rectangles subjected to correction, namely, a plurality of candidates of the frequently changed region (operation S 109: affirmative), the frequently changed-region discrimination unit 14d performs the following processing. Namely, the frequently changed-region discrimination unit 14d combines plural candidates of the frequently changed region with one another into a rectangle including the plural candidates of the frequently changed region the distances between which are less than or equal to a threshold value (operation S 110). In addition, when there are not a plurality of candidates of the frequently changed region (operation S109: negative), the frequently changed-region discrimination unit 14d shifts to operation S111 without performing the combination of rectangles.

Subsequently, the frequently changed-region discrimination unit 14d transmits, to the client terminal 20, attribute information used for specifying the position and size of the frequently changed region (operation S111). In addition, the frequently changed-region discrimination unit 14d clears the numbers of times meshes are changed, mapped in the working internal memory (operation S112).

After that, the frequently changed-region discrimination unit 14d determines whether or not the updated rectangle generated by the screen generation unit 14b is included in a frequently changed region stored in the working internal memory, namely, a region to which the second image transmission unit 14g is transmitting a moving image (operation S113).

At this time, when the updated rectangle is not included in the frequently changed region (operation S 113: negative), the first image transmission unit 14f transmits the image and the attribute information of the updated rectangle to the client terminal 20 (operation S 114), and terminates the processing.

On the other hand, when the updated rectangle is included in the frequently changed region (operation S 113: affirmative), the following processing is performed. Namely, the frequently changed-region discrimination unit 14d cuts out the bitmapped image of a portion corresponding to the frequently changed region from the bitmap data drawn in the frame buffer 13, and subsequently causes the encoder 14e to encode the cut out bitmapped image (operation S 115). In addition, the encoded image of the frequently changed region, encoded by the encoder 14e, is transmitted to the client terminal 20 (operation S 116), and the processing is terminated.

In addition, the above-mentioned processing from operation S 104 to operation S 112, which relates to the discrimination of the frequently updated region, may be performed as processing other than the flow illustrated in Fig. 8. In this case, every time a certain period of time has elapsed from the starting of the storage of the updated rectangle, the processing turns out to be activated.

In addition, the above-mentioned processing from operation S 113 to operation S 114 may be performed as processing other than the flow illustrated in Fig. 8. In this case, every time the screen generation unit 14b generates the updated rectangle, the processing turns out to be activated.

In addition, the above-mentioned processing from operation S115 to operation S116 may be performed as processing other than the flow illustrated in Fig. 8. In this case, every time the bitmap data is drawn in the frame buffer 13, it is determined whether or not the attribute information of the frequently changed region is registered in the working internal memory. At this time, when the attribute information of the frequently changed region is registered, the processing turns out to be activated.

[Advantageous Effect of Embodiment]

As described above, in the server device 10, a frequently changed region that utilizes a compression method for a moving image is discriminated independent of an application. Furthermore, in the server device 10, while an image in a portion in which there is a change is transmitted with respect to a region other than the frequently changed region, an image corresponding to the frequently changed region is compressed into data based on a compression method for a moving image. Therefore, in the server device 10, the amount of data is reduced focusing on an image to be an underlying cause for degrading an operational response from among images to be transmitted to the client terminal 20. In addition to this, the loads of an encoder in the server device 10 which performs compression processing and a decoder in the client terminal 20 which performs decoding processing are reduced.

Therefore, according to the server device 10 and the thin client system 3, an operational response is improved while maintaining the general versatility of a thin client. Furthermore, in the server device 10 and the thin client system 3, since the amount of data to be transmitted to the client terminal 20 is reduced, a transmission delay between the server device 10 and the client terminal 20 is reduced. This results in reducing the possibility that the dropping frames of an image to be displayed occur on the client terminal 20 side.

In addition, when there are a plurality of mesh-connected bodies, the server device 10 converts the plural mesh-connected bodies into a region including the plural mesh-connected bodies and a region adjacent thereto. Accordingly, in the server device 10, even if no motion occurs in a whole region in which a moving image is actually regenerated, a frequently changed region is formed on the basis of a motion in a portion in a region in which the moving image is regenerated, so as to cover the regeneration region of the moving image.

[Another Embodiment]

Hereinafter, another embodiment will be described.

[Delay of Map Clearing]

While, for example, in the above-mentioned embodiment, a case has been described in which the map for change frequency determination is cleared in synchronization with the period during which the frequently changed-region discrimination unit 14d stores the updated rectangle, a trigger causing the map for change frequency determination to be cleared is not limited to the example.

As an example, the frequently changed-region discrimination unit 14d stores in a region management table a region discriminated as a frequently changed region. After a change frequency has not exceeded a threshold value in the region stored in the region management table, the frequently changed-region discrimination unit 14d also continuously discriminates the frequently changed region stored in the region management table, for a certain period of time.

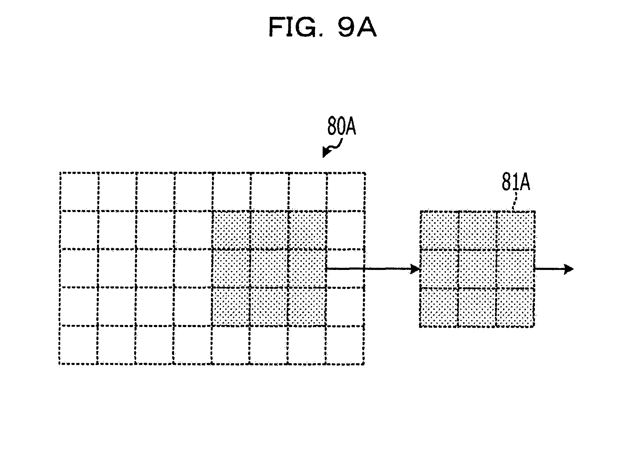

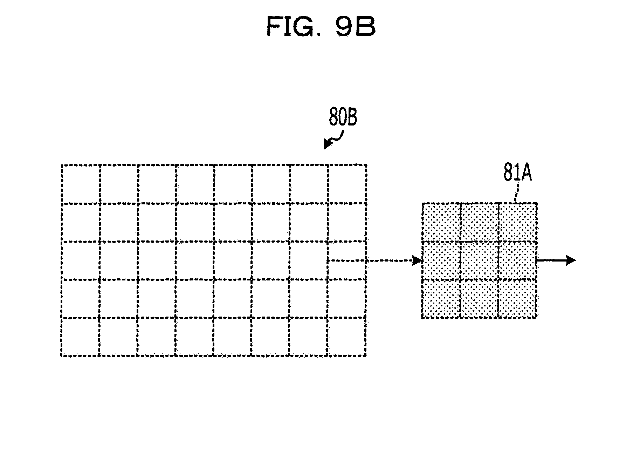

Figs. 9A and 9B are diagrams for explaining a delay guideline for map clearing. In an example in Fig. 9A, a map 80A for change frequency determination at a time point when the frequently changed region has been discriminated for the first time and a discrimination result 81A for the frequently changed region at the time point are illustrated. In addition, in an example in Fig. 9B, a map 80B for change frequency determination at a specific time point within a certain period of time from when the frequently changed region has been discriminated for the first time and a discrimination result 81B for the frequently changed region at the time point are illustrated.

As illustrated in Fig. 9A, when a mesh-connected body, the number of times which is changed exceeds a threshold value, is acquired in the map 80A, and the discrimination result 81A for the frequently changed region is obtained, the discrimination result 81A is taken over for a certain period of time even if a mesh-connected body, the number of times which is changed exceeds a threshold value, is not subsequently acquired. Namely, as illustrated in Fig. 9B, even if a mesh-connected body, the number of times which is changed exceeds a threshold value, is not acquired in the map 80A, the discrimination result 81A for the frequently changed region is taken over during a certain period of time from when the discrimination result 81A for the frequently changed region has been discriminated for the first time. In addition, with respect to the above-mentioned "threshold value", an end-user may be caused to select one of values set in a stepwise manner by the developer of a server-side remote screen control-use application, or an end-user may directly set the value thereof.

Accordingly, even if a motion intermittently disappears in a region in which a moving image is actually regenerated, the frequently changed region is prevented from being intermittently discriminated, and as a result, the dropping frames of an image are prevented from occurring in the frequently changed region. Furthermore, since the size of the frequently changed region becomes stable owing to the takeover of the discrimination result for the frequently changed region, the number of times a parameter at the time of encoding is initialized is reduced, and as a result, a load on an encoder is reduced.

[Suppression of Shrinking of Frequently Changed Region]

As another example, the frequently changed-region discrimination unit 14d stores in the region management table a region discriminated as the frequently changed region. When the region stored in the region management table shrinks to a size smaller than that of a region previously discriminated as a frequently changed region, the frequently changed-region discrimination unit 14d performs the following processing. Namely, when the degree of the shrinking is less than or equal to a certain threshold value, the frequently changed-region discrimination unit 14d takes over the frequently changed region stored in the region management table, as a current discrimination result.

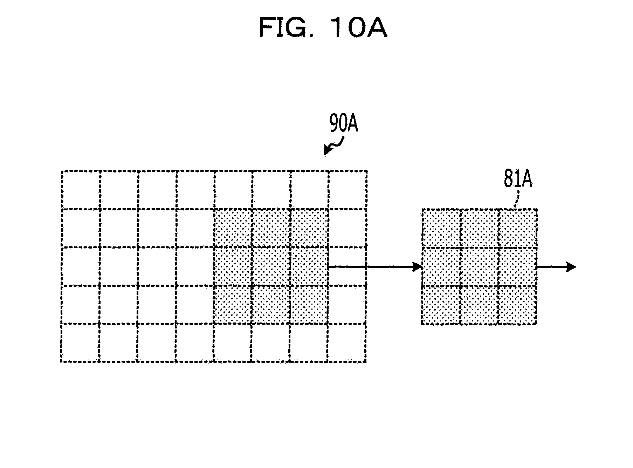

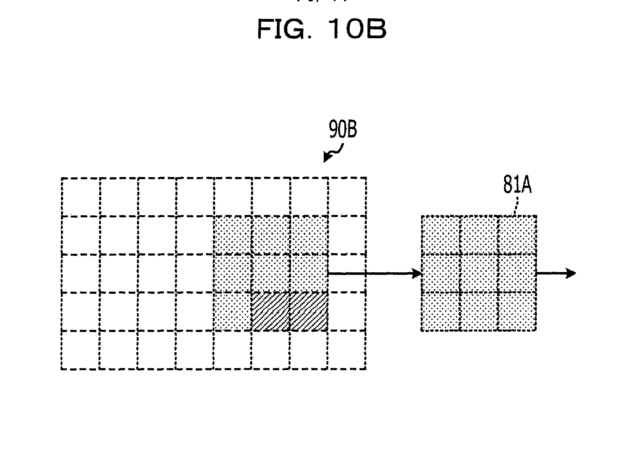

Figs. 10A and 10B are diagrams for explaining a suppression guideline for the shrinking of the frequently changed region. An example in Fig. 10A illustrates a map 90A for change frequency determination at a time point T1 and a discrimination result 91A for the frequently changed region at the time point T1. In addition, an example in Fig. 10B illustrates a map 90B for change frequency determination at a time point T2 and a discrimination result 91B for the frequently changed region at the time point T2. In addition, it is assumed that a relationship between the above-mentioned time points T1 and T2 is T1 < T2.

As illustrated in Fig. 10A, when a mesh-connected body, the number of times which is changed exceeds a threshold value, is acquired in the map 90A, and the discrimination result 91A for the frequently changed region is obtained, the frequently changed region is not immediately shrunk even if a mesh-connected body, the number of times which is changed exceeds a threshold value, is shrunk after the time point T1. Namely, as illustrated in Fig. 10B, when the area of a shaded portion drawn by diagonal lines is less than or equal to a threshold value even if the mesh-connected body, the number of times which is changed exceeds a threshold value, shrinks with respect to the shaded portion, the discrimination result 91A for the frequently changed region is taken over. For example, the former threshold value is less than or equal to a half of the area.

Accordingly, even if a motion in a portion of a region in which a moving image is actually regenerated intermittently occurs, the frequently changed region is continuously discriminated. Therefore, the frequently changed region is prevented from being intermittently discriminated, and as a result, the dropping frames of an image are prevented from intermittently occurring in the frequently changed region. Furthermore, since the size of the frequently changed region becomes stable owing to the takeover of the discrimination result for the frequently changed region, the number of times a parameter at the time of encoding is initialized is reduced, and as a result, a load on an encoder is reduced.

[Other]

In addition, it is not necessary for individual constructional elements in individual devices illustrated in figures to be physically constructed in such ways as illustrated in figures. Namely, a specific embodiment of the distribution or integration of the individual devices is not limited to one of examples illustrated in figures, and all or part of the individual devices may be functionally or physically integrated or distributed in arbitrary units according to various loads and various statuses of use.

For example, the transmission processing for an image, executed by the first image transmission unit 14f and the second image transmission unit 14g in the server device 10, may be integrated into one image transmission unit. In addition, the reception processing for an image, executed by the first image reception unit 23b and the second image reception unit 23d in the client terminal 20, may be integrated into one image reception unit. Furthermore, the display control processing, executed by the first display controller 23c and the second display controller 23f in the client terminal, may be integrated into one display controller.

In addition, the operation information acquisition unit 14a, the screen generation unit 14b, the change frequency determination unit 14c, the frequently changed-region discrimination unit 14d, the encoder 14e, the first image transmission unit 14f, or the second image transmission unit 14g, included in the server device, may be as follows. As an example, one of these functional units may be connected through a network, as an external device for the server device 10. As another example, other devices may include these functional units, respectively, and by cooperating with one another through a network connection, the devices may realize the function of the above-mentioned server device 10. In the same way, the operation information notification unit 23a, the first image reception unit 23b, the first display controller 23c, the second image reception unit 23d, the decoder 23e, or the second display controller 23f, included in the client terminal 20, may operate in such a way as described above.

[Image Transmission Program]

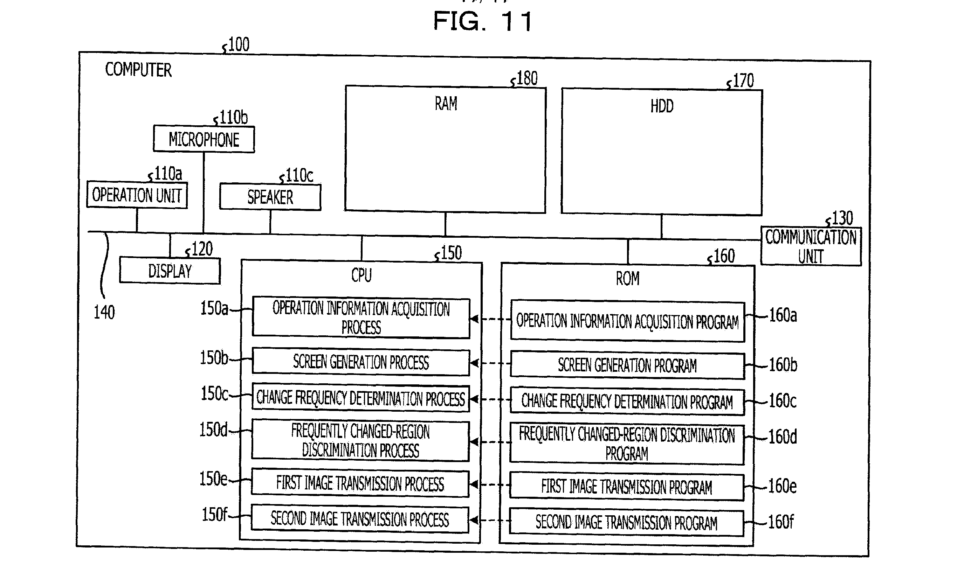

In addition, various kinds of processing operations described in the above-mentioned embodiment may be executed by a computer such as a personal computer, a workstation, or the like in accordance with a preliminarily prepared program. In addition, hereinafter, an example of a computer that executes an image transmission program having the same function as that in the above-mentioned embodiment will be described with reference to Fig. 11. In addition, Fig. 11 is a diagram for explaining an example of the computer that executes the image transmission program according to an embodiment. In addition, while, here, an example of a computer will be described that executes the image transmission program having the same function as that of the server device 10, a case in which a computer executes an image display program having the same function as that of the client terminal 20 may also be described in the same way.

As illustrated in Fig. 11, a computer 100 according to an embodiment includes an operation unit 110a, a microphone 110b, a speaker 110c, a display 120, and a communication unit 130. Furthermore, the computer 100 includes a CPU 150, a ROM 160, a hard disk drive (HDD) 170, a random access memory (RAM) 180. The individual units 110 to 180 are connected to one another through a bus 140.

In the ROM 160, a control program is preliminarily stored that fulfills the same functions as those of the operation information acquisition unit 14a, the screen generation unit 14b, and the change frequency determination unit 14c, illustrated in the above-mentioned embodiment. Furthermore, in the ROM 160, a control program is preliminarily stored that fulfills the same functions as those of the frequently changed-region discrimination unit 14d, the first image transmission unit 14f, and the second image transmission unit 14g. Namely, as illustrated in Fig. 11, an operation information acquisition program 160a, a screen generation program 160b, a change frequency determination program 160c, and a frequently changed-region discrimination program 160d are stored in the ROM 160. Furthermore, a first image transmission program 160e and a second image transmission program 160g are stored in the ROM 160. These programs 160a to 160f may be arbitrarily integrated or separated in the same way as the individual constructional elements in the server device 10 illustrated in Fig. 2. In addition, with respect to individual pieces of data stored in the RAM 160, it is not necessary to constantly store all pieces of data in the RAM 160, and data used for processing may be stored in the RAM 160.

In addition, the CPU 150 reads out and executes these programs 160a to 160f from the ROM 160. Accordingly, as illustrated in Fig. 11, with respect to the individual programs 160a to 160d, the CPU 150 functions as an operation information acquisition process 150a, a screen generation process 150b, a change frequency determination process 150c, and a frequently changed-region discrimination process 150d, respectively. Furthermore, with respect to the individual programs 160e and 160f, the CPU 150 functions as a first image transmission process 150e and a second image transmission process 150f, respectively. These processes 150a to 150f correspond to the operation information acquisition unit 14a, the screen generation unit 14b, the change frequency determination unit 14c, the frequently changed-region discrimination unit 14d, the first image transmission unit 14f, and the second image transmission unit 14g, illustrated in Fig. 2, respectively. In addition, the CPU 150 executes the image transmission program using the RAM 180. In addition, with respect to individual processing units virtually executed on the CPU 150, all processing units may not constantly operate on the CPU 150, and it may be only necessary to virtually realize the processing units.

In addition, the above-mentioned image transmission program is not necessarily stored in the HDD 170 or the ROM 160 from the beginning. For example, individual programs are stored in a "portable physical medium" such as a flexible disk, a so-called FD, a CD-ROM, a DVD disk, a magneto optical disk, an IC card, or the like, which is inserted into the computer 100. In addition, the computer 100 may acquire and execute individual programs from the portable physical medium. In addition, individual programs may be stored in physical media or the like included in another computer or another server device connected to the computer 100 through a public line, Internet, a LAN, a WAN, digital communication utilizing a broadcast wave, or the like, and the computer 100 may acquire and execute individual programs from these media.

A computer-readable storage medium storing a program therein is a physical medium. The computer-readable storage medium storing a program therein does not include a carrier wave in which a computer program is embedded. Even if a computer program is embedded in a carrier wave and transmitted, there is a readable storage medium installed in a computer that is the transmission source of the program. Accordingly, the computer-readable storage medium is a physical substantive storage medium. In addition, the broadcast wave may be transmitted using a ground wave, a satellite broadcast wave, or a cable television transmission network. With respect to cable television, a carrier wave may be modulated into an optical signal, and an optical fiber may be used as a transmission medium. In such a way, regardless of an embodiment of a transmission medium for a carrier wave, the computer-readable storage medium is a physical substantive storage medium, at any rate.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. An information processing device comprising:
a communication unit configured to connect to a network;
a memory configured to hold an image indicating an execution result of a virtual machine; and
a processor configured to execute processing, wherein the processor is arranged to:
determine the frequency of a change between frames with respect to each of a plurality of regions into which the image held in the memory is segmented,
compress, on the basis of first compression processing, an image in a region in which there is the change and transmits the compressed image to a terminal device connected through the network,
discriminate a frequently changed region whose frequency of a change exceeds a threshold value,
halt the first compression processing and the transmission processing, with respect to the discriminated frequently changed region,
perform second compression processing, in which the compression ratio of a temporally continuous image is higher than that of the first compression processing, on an image in the discriminated frequently changed region, and
transmit the image compressed on the basis of the second compression processing to the terminal device.

2. The information processing device according to claim 1, wherein
when discriminating a plurality of frequently changed regions, the processing for discriminating a frequently changed region converts the plural frequently changed regions into a region including the plural frequently changed regions and a region adjacent thereto.

3. The information processing device according to claim 1 or 2, wherein
the processing for discriminating a frequently changed region discriminates the region as a frequently changed region during a certain period of time after the change frequency of the frequently changed region has not exceeded a threshold value, and terminates the discrimination of the frequently changed region when the change frequency does not exceed the threshold value after the certain period of time.

4. The information processing device according to claim 1, 2, or 3 wherein
the processing for discriminating a frequently changed region causes a region management table, used for storing the position and the size of a discriminated frequently changed region, to store the position and the size of the frequently changed region, and regards, as a discrimination result, the frequently changed region stored in the region management table, when the discriminated frequently changed region shrinks to a size smaller than that of a frequently changed region stored in the region management table and located at a same position and the degree of the shrinking is less than or equal to a threshold value.

5. An image transmission program causing a computer to execute processing, the processing comprising:
drawing an image indicating an execution result of a virtual machine;
determining the frequency of a change between frames with respect to each of a plurality of regions into which the image is segmented;
compressing, on the basis of first compression processing, an image in a region in which there is the change and transmitting the compressed image to a terminal device connected through the network;
discriminating a frequently changed region whose frequency of a change exceeds a threshold value;
halting the first compression processing and the transmission processing, with respect to the discriminated frequently changed region;
performing second compression processing, in which the compression ratio of a temporally continuous image is higher than that of the first compression processing, on an image in the discriminated frequently changed region, and
transmitting the image compressed on the basis of the second compression processing to the terminal device.

6. The image transmission program according to claim 5, wherein the image transmission program transmits an image display program to the terminal device connected through the network and the image display program causes the terminal device to execute processing, the processing comprising:
receiving the image compressed on the basis of the first compression processing;
decoding the received image on the basis of a first decoding method and causing a display unit to display the decoded image;
receiving the image compressed on the basis of the second compression processing;
decoding the received image on the basis of a second decoding method; and
causing the display unit to display the decoded image.

7. An image display method comprising:
drawing an image indicating an execution result of a virtual machine;
determining the frequency of a change between frames with respect to each of a plurality of regions into which the image is segmented;
compressing, on the basis of first compression processing, an image in a region in which there is the change and transmitting the compressed image to a terminal device connected through the network;
discriminating a frequently changed region whose frequency of a change exceeds a threshold value;
halting the first compression processing and the transmission processing, with respect to the discriminated frequently changed region;
performing second compression processing, in which the compression ratio of a temporally continuous image is higher than that of the first compression processing, on an image in the discriminated frequently changed region;
causing an information processing device to execute processing for transmitting the image compressed on the basis of the second compression processing to the terminal device;
receiving the image compressed on the basis of the first compression processing;
decoding the received image on the basis of a first decoding method and causing a display unit to display the decoded image;
receiving the image compressed on the basis of the second compression processing;
decoding the received image on the basis of a second decoding method; and
causing the information processing device to execute processing for causing the display unit to display the decoded image.
